# EUROPÄISCHE PATENTANMELDUNG

(11) **EP 4 667 204 A1**
(43) Veröffentlichungstag der Anmeldung: **24.12.2025**
(21) Anmeldenummer: 25178528.3
(22) Anmeldetag: 23.05.2025
(51) Int. Cl.: B29D 30/06

(54) **REIFENROHLINGENTGRATVORRICHTUNG**

(30) Priorität: 17.06.2024 DE 102024205589
(71) Anmelder: Continental Reifen Deutschland GmbH, 30175 Hannover (DE)
(72) Erfinder: Moreira, Artur, 4760-606 Lousado (PT); Sousa, Bruno, 4760-606 Lousado (PT)
(74) Vertreter: Continental Corporation

(57) **Zusammenfassung**

Die vorliegende Erfindung betrifft eine Reifenrohlingentgratvorrichtung (1) mit einem Schneidewerkzeug (10), welches ausgebildet ist, rotatorisch um die Längsachse (X) angetrieben und relativ zu einer zu entgratenden Oberfläche eines Reifenrohlings positioniert zu werden. Die Reifenrohlingentgratvorrichtung (1) ist dadurch gekennzeichnet, dass das Schneidewerkzeug (10) wenigstens einen Adapter (11) aufweist, welcher ausgebildet ist, ein Schneidmesser, vorzugsweise eine Schneidplatte, in einer Schneidmesseraufnahme (11a) derart aufzunehmen, so dass das Schneidmesser relativ zu der zu entgratenden Oberfläche des Reifenrohlings positioniert werden kann.

## Beschreibung

Die vorliegende Erfindung betrifft eine Reifenrohlingentgratvorrichtung.

Es ist bekannt, verschiedene Arten von Fahrzeugen auf Rädern zu bewegen bzw. mittels Räder auf einem Untergrund abrollen zu lassen. Dies erfolgt heutzutage üblicherweise mit Reifen, welche am Umfang des Rades sitzen und die Kräfte zwischen Rad und Untergrund wie beispielsweise einer Fahrbahn übertragen.

Derjenige Teil des Reifens des Fahrzeugs, d.h. des Fahrzeugreifens, welcher Kontakt zum Untergrund hat, wird üblicherweise als Reifenaufstandsfläche bezeichnet, dessen Lauffläche sich um den Reifen herumerstreckt. In der Querrichtung schließt sich beidseitig der Lauffläche jeweils eine Seitenwand an, welche der Lauffläche abgewandt mit einem Wulst endet, welcher der festen Verbindung mit der Felge dient. Die Lauffläche weist nach radial außen üblicherweise ein Profil auf, welches der Verbesserung der Verbindung mit dem Untergrund und insbesondere mit der Fahrbahn dient. Radial unterhalb der Lauffläche liegt die Karkasse als Festigkeitsträger, welche den tragenden Unterbau des Reifens darstellt. Die Seiten der Karkasse erstrecken sich bis zum Wulst und stehen so kraftübertragend mit der Felge in Verbindung.

Zur Herstellung von Reifen werden üblicherweise Vulkanisierformen verwendet, welche unter anderem aus Formteilen bestehen, welche gemeinsam die radial äußere Oberfläche des Reifens wie den Laufstreifen sowie die übrigen äußeren Flächen des Reifens wie den Schulterbereich, die Seitenwände und den Wulstbereich formen. Die Segmente der Vulkanisierform, welche den Laufstreifen des Reifens formen, werden Profil- oder Formsegmente genannt.

Der unvulkanisierte "grüne" Reifenrohling wird in der Vulkanisierform vulkanisiert und durch Kautschukvernetzungsreaktionen in seinen endgültigen gummielastischen Zustand überführt. Dabei erhält der Reifen seine Profilgestaltung durch die entsprechende Negativgestaltung der Formflächen der Formsegmente. Unter Formflächen sind diejenigen Flächen der Formsegmente gemeint, welche dem Reifenrohling seine entsprechende Gestaltung geben.

Zur Definition bzw. zur Verbesserung des Kontakts zwischen dem Reifen und dem Untergrund ist die Lauffläche des Reifens üblicherweise profiliert ausgebildet, d.h. der Reifen weist radial nach außen zum Untergrund hin eine profilierte Lauffläche auf. Die profilierte Lauffläche besteht üblicherweise aus einer bestimmten Anordnung von Blöcken, die durch Rillen getrennt sind.

In der Produktion werden die unvulkanisierten "grünen" Reifenrohlinge aus unvulkanisiertem elastomeren Material geformt und anschließend vulkanisiert, wie bereits erwähnt. Die Laufflächen können dabei separat extrudiert und anschließend auf die Karkasse aufgelegt und dort vulkanisiert werden. Zuvor sind jedoch Grate als Rückstände des Ausformens, insbesondere der Wulste und bzw. oder der Schultern des Reifens, durch Entgraten zu entfernen, da dies beim unvulkanisierten Material des "grünen" Reifenrohlings einfach, schneller und rückstandsfreier möglich ist als beim vulkanisierten Reifen.

Das Entgraten des "grünen" Reifenrohlings, d.h. das Entfernen der unerwünschten Grate, erfolgt bisher manuell, indem entsprechende Klingen von einer Person entlang der Oberfläche des "grünen" Reifenrohlings, insbesondere der Wulste und bzw. oder der Schultern des Reifens, geführt werden, um die Grate zu entfernen, d.h. um die Grate abzuschneiden.

Soll das Entgraten des "grünen" Reifenrohlings und insbesondere der Wulste und bzw. oder der Schultern des "grünen" Reifenrohlings automatisch erfolgen, so kann hierfür ein Roboter oder dergleichen verwendet werden, welcher ein Entgratwerkzeug wie eine Klinge bzw. ein Schneidmesser entsprechend führen kann.

Dies führt jedoch dazu, dass ein entsprechendes Schneidmesser konstruiert werden muss, da die Schneidmesser, welche für das manuelle Abschneiden bzw. Entgraten des Wulstgrates bisher verwendet werden, erfahrungsgemäß aufgrund der Maßabweichungen des Schneidmessers unzureichend für das automatische Entgraten bzw. Schneiden sind.

Eine Aufgabe der vorliegenden Erfindung ist es, die Möglichkeiten zum Entgraten von "grünen" Reifenrohlingen, insbesondere von deren Wulsten, der eingangs beschriebenen Art zu verbessern. Zumindest soll eine Alternative zu den bekannten Möglichkeiten zum Entgraten von "grünen" Reifenrohlingen, insbesondere von deren Wulsten, geschaffen werden.

Die Aufgabe wird erfindungsgemäß durch eine Reifenrohlingentgratvorrichtung mit den Merkmalen gemäß Patentanspruch 1 gelöst. Vorteilhafte Weiterbildungen sind in den Unteransprüchen beschrieben.

Somit betrifft die vorliegende Erfindung eine Reifenrohlingentgratvorrichtung mit einem Schneidewerkzeug, welches ausgebildet ist, rotatorisch um die Längsachse angetrieben und relativ zu einer zu entgratenden Oberfläche eines Reifenrohlings positioniert zu werden.

Die erfindungsgemäße Reifenrohlingentgratvorrichtung ist dadurch gekennzeichnet, dass das Schneidewerkzeug wenigstens einen Adapter aufweist, welcher ausgebildet ist, ein Schneidmesser, vorzugsweise eine Schneidplatte, in einer Schneidmesseraufnahme derart aufzunehmen, so dass das Schneidmesser relativ zu der zu entgratenden Oberfläche des Reifenrohlings positioniert werden kann. Je nach Ausrichtung des Adapters bzw. des Schneidmessers kann ein Entgraten der Wulste oder der Schultern des "grünen" Reifenrohlings erfolgen.

Mittels des Adapters können somit Schneidmesser bzw. Schneiden und insbesondere Schneidplatten, wie sie beispielsweise von der spanenden Bearbeitung bekannt sind, mit dem Schneidwerkzeug feststehend und vorzugsweise auswechselbar verbunden bzw. dort befestigt werden, ohne das Schneidmesser konstruktiv verändern und insbesondere an das Schneidwerkzeug anpassen zu müssen. Vielmehr kann der Adapter auf der einen Seite an das Schneidwerkzeug und auf der anderen Seite an das Schneidmesser angepasst bzw. entsprechend konstruiert werden, um das Schneidwerkzeug und das Schneidmesser zu verbinden. Über verschiedene Adapter kann das Schneidwerkzeug an unterschiedliche Schneidmesser angepasst, und umgekehrt.

Auch kann der Adapter so konstruiert sein, um das Schneidmesser in der gewünschten und für den Entgratprozess erforderlichen Ausrichtung gegenüber der zu entgratenden Fläche des Reifenrohlings aufzunehmen. Ferner können unterschiedliche Adapter so konstruiert sein, um ein und dasselbe Schneidmesser in unterschiedlichen Ausrichtungen gegenüber der zu entgratenden Fläche des Reifenrohlings aufzunehmen. Somit können hinsichtlich des Schneidmessers alle Winkel und Abmessungen erreicht werden, die für einen guten und sauberen Schnitt erforderlich sind.

In jedem Fall kann das Schneidewerkzeug einen den automatischen Prozess der Entfernung von Wulstgraten in der automatischen Trimmmaschine verwendet.

In jedem Fall kann ein automatischer Prozess kraftgeregelt erfolgen, indem das Schneidewerkzeug, vorzugsweise mittels einer Montageschnittstelle, mit einem Kraft-/Momentensensor verbunden wird, welcher seinerseits mit wenigstens einem beweglichen angetriebenen Glied der Reifenrohlingentgratvorrichtung verbunden ist. Somit kann der Kontakt zu der zu entgratenden Oberfläche des Reifenrohlings kraftgeregelt erfolgen, was zum einen das Ergebnis des Entgratens verbessern und zum anderen Beschädigungen des Reifenrohlings vermeiden kann.

Vorzugsweise ist der Adapter mittels additiver Fertigung hergestellt worden, wodurch eine Gewichtsreduzierung und bzw. oder eine Erhöhung der Präzision erreicht werden können.

Gemäß einem Aspekt der Erfindung weist das Schneidewerkzeug mehrere Adapter auf, welche jeweils ausgebildet sind, ein Schneidmesser, vorzugsweise eine Schneidplatte, in einer Schneidmesseraufnahme aufzunehmen.

Hierdurch kann die Schnittleistung entsprechend erhöht werden.

Gemäß einem weiteren Aspekt der Erfindung weist das Schneidewerkzeug in der Umfangsrichtung um die Längsachse zueinander versetzt genau vier Adapter auf, welche jeweils ausgebildet sind, ein Schneidmesser, vorzugsweise eine Schneidplatte, in einer Schneidmesseraufnahme aufzunehmen.

Dies kann einen guten Kompromiss zwischen Anzahl der Schneidmesser und damit auch Anzahl der Adapter auf der einen Seite und Platzbedarf der Schneidmesser bzw. Adapter, Abmessungen der Schneidmesser sowie Zugänglichkeit der Schneidmesser bei der Montage bzw. beim Austauschen und dergleichen auf der anderen Seite darstellen.

Gemäß einem weiteren Aspekt der Erfindung weist das Schneidewerkzeug, vorzugsweise pro Adapter, ein erstes, radial inneres Verbindungselement und sowohl radial zur Längsachse als auch in der Umfangsrichtung zur Längsachse versetzt angeordnetes zweites, radial äußeres Verbindungselement auf und der Adapter weist ein erstes, radial äußeres Verbindungselement und sowohl radial zur Längsachse als auch in der Umfangsrichtung zur Längsachse versetzt angeordnetes zweites, radial äußeres Verbindungselement auf, wobei das erste, radial innere Verbindungselement des Schneidwerkzeugs und das erste, radial äußere Verbindungselement des Adapters sowie zweite, radial äußere Verbindungselement des Schneidwerkzeugs und das zweite, radial äußere Verbindungselement des Adapters direkt oder indirekt miteinander feststehend verbunden sind.

Dies kann eine konstruktive Möglichkeit der Umsetzung darstellen, welche insbesondere zum Entgraten von Wulsten von Reifen geeignet ist. Dabei kann der radiale Versatz sowie der Versatz in der Umfangsrichtung die Gestaltungsmöglichkeiten erhöhen und bzw. oder die feststehende Verbindung von Schneidwerkzeug und Adapter verbessern.

Dabei kann die Anordnung und Ausbildung der Verbindungselemente des Adapters sowie des Schneidwerkzeugs vorzugsweise derart erfolgen, dass die Verbindungselemente als Durchgangsöffnungen bzw. als Löcher ausgebildet sind, um einem automatischen Wechsel des Adapters samt Schneidmesser zu ermöglichen. Somit können diese Durchgangsöffnungen mittels eines speziellen Positionierers mittels einer Schraube oder dergleichen versehen werden, um sicherzustellen, dass sich der Adapter samt Schneidmesser als Werkzeug immer in der gleichen kontrollierten und korrekten Position befindet, um den automatischen Werkzeugwechsel durchzuführen, beispielsweise wenn die Schneidmesser gewechselt werden müssen.

Gemäß einem weiteren Aspekt der Erfindung ist das erste, radial innere Verbindungselement des Schneidwerkzeugs eine erste, radial innere Gewindebohrung und das erste, radial innere Verbindungselement des Adapters eine erste, radial innere Durchgangsöffnung, welche mittels einer Schraube feststehend miteinander verbunden sind, und bzw. oder das zweite, radial äußere Verbindungselement des Schneidwerkzeugs ist eine zweite, radial äußere Gewindebohrung und das zweite, radial äußere Verbindungselement des Adapters eine zweite, radial äußere Durchgangsöffnung ist, welche mittels einer Schraube feststehend miteinander verbunden sind.

Dies kann eine konkrete Möglichkeit der Umsetzung einer feststehenden, aber lösbaren Verbindung von Schneidwerkzeug und Adapter darstellen.

Gemäß einem weiteren Aspekt der Erfindung weist das Schneidewerkzeug, vorzugsweise pro Adapter, ein erstes, entlang der Längsachse ausgerichtetes Verbindungselement und ein sowohl radial zur Längsachse als auch entlang der Längsachse versetzt angeordnetes zweites Verbindungselement auf und der Adapter weist ein erstes, entlang der Längsachse ausgerichtetes Verbindungselement und ein sowohl radial zur Längsachse als auch entlang der Längsachse versetzt angeordnetes Verbindungselement auf, wobei das erste, entlang der Längsachse ausgerichtete Verbindungselement des Schneidwerkzeugs und das erste, entlang der Längsachse ausgerichtete Verbindungselement des Adapters sowie das sowohl radial zur Längsachse als auch entlang der Längsachse versetzt angeordnete zweite Verbindungselement des Schneidwerkzeugs und das sowohl radial zur Längsachse als auch entlang der Längsachse versetzt angeordnete zweite Verbindungselement des Adapters direkt oder indirekt miteinander feststehend verbunden sind.

Dies kann eine konstruktive Möglichkeit der Umsetzung darstellen, welche insbesondere zum Entgraten der Schultern von Reifen geeignet ist. Dabei kann die Ausrichtung entlang der Längsachse sowie der radiale Versatz die Gestaltungsmöglichkeiten erhöhen und bzw. oder die feststehende Verbindung von Schneidwerkzeug und Adapter verbessern.

Gemäß einem weiteren Aspekt der Erfindung sind das erste, entlang der Längsachse ausgerichtete Verbindungselement des Schneidwerkzeugs eine erste, entlang der Längsachse ausgerichtete Gewindebohrung und das erste, entlang der Längsachse ausgerichtete Verbindungselement des Adapters ist eine erste, entlang der Längsachse ausgerichtete Durchgangsöffnung, welche mittels einer Schraube feststehend miteinander verbunden sind, und bzw. oder das sowohl radial zur Längsachse als auch entlang der Längsachse versetzt angeordnete zweite Verbindungselement des Schneidwerkzeugs ist eine sowohl radial zur Längsachse als auch entlang der Längsachse versetzt angeordnete zweite Gewindebohrung und das sowohl radial zur Längsachse als auch entlang der Längsachse versetzt angeordnete zweite Verbindungselement des Adapters ist eine sowohl radial zur Längsachse als auch entlang der Längsachse versetzt angeordnete zweite Durchgangsöffnung, welche mittels einer Schraube feststehend miteinander verbunden sind.

Dies kann eine konkrete Möglichkeit der Umsetzung einer feststehenden, aber lösbaren Verbindung von Schneidwerkzeug und Adapter darstellen.

Gemäß einem weiteren Aspekt der Erfindung ist der Adapter geschwungen und bzw. oder winkelig, vorzugsweise rechtwinkelig, geformt.

Dies kann die Gestaltungsmöglichkeiten erhöhen und bzw. oder die feststehende Verbindung von Schneidwerkzeug und Adapter verbessern.

Gemäß einem weiteren Aspekt der Erfindung erstreckt sich eine freistehende Flanke des Adapters entlang der Umfangsrichtung gegenüber dem zweiten, radial äußeren Verbindungselement des Adapters und die freistehende Flanke des Adapters ist zum ersten, radial inneren Verbindungselement des Adapters radial beabstandet.

Dies kann die Gestaltungsmöglichkeiten erhöhen, insbesondere zum Entgraten der Wulste von Reifen. Insbesondere kann das Schneidmesser auf diese Art und Weise an der freistehende Flanke angeordnet werden, wie nachfolgend noch näher beschrieben werden wird.

Zur Verbesserung der Stabilität der freistehenden Flanke und dem dort vorzugsweise aufgenommenen Schneidmesser kann die freistehende Flanke zu dessen freistehender Spitze zulaufend, d.h. sich verjüngend, ausgebildet sein, so dass sich die freistehende Flanke ihrer Spitze immer weiter verdickt bzw. verstärkt und so stabil und feststehend mittels ihrer Verbindungselemente mit den korrespondierenden Verbindungselementen des Schneidwerkzeugs verbunden werden kann.

Gemäß einem weiteren Aspekt der Erfindung erstreckt sich eine freistehende Flanke des Adapters entlang der Längsachse gegenüber dem sowohl radial zur Längsachse als auch entlang der Längsachse versetzt angeordneten zweiten Verbindungselement des Adapters und die freistehende Flanke des Adapters ist zur Längsachse radial beabstandet.

Dies kann die Gestaltungsmöglichkeiten erhöhen, insbesondere zum Entgraten der Schultern von Reifen. Insbesondere kann das Schneidmesser auf diese Art und Weise an der freistehende Flanke angeordnet werden, wie zuvor bereits beschrieben.

Gemäß einem weiteren Aspekt der Erfindung ist die Schneidmesseraufnahme des Adapters an dessen freistehender Flanke angeordnet.

Die freistehende Flanke samt Schneidmesser ragt somit entlang der Umfangsrichtung in den Raum, so dass abgeschnittene Späne um die freistehende Flanke des Adapters herum in alle Richtungen entweichen können, was die Abfuhr von Schnittgut begünstigen und somit erreichen kann, dass das Schnittgut das Schneidmesser nicht blockieren kann.

Gemäß einem weiteren Aspekt der Erfindung weist die freistehende Flanke des Adapters wenigstens eine Schnittgutöffnung auf, welche ausgebildet und relativ zur Schneidmesseraufnahme, vorzugsweise unmittelbar anschließend an die Schneidmesseraufnahme, angeordnet ist, um von einem in der Schneidmesseraufnahme aufgenommenem Schneidmesser erzeugtes Schnittgut nach radial innen zur freistehenden Flanke des Adapters abzuführen.

Die kann, aus den zuvor genannten Gründen, die Abfuhr von Schnittgut weiter begünstigen.

Gemäß einem weiteren Aspekt der Erfindung ist der Adapter ausgebildet, das Schneidmesser, vorzugsweise die Schneidplatte, auswechselbar in der Schneidmesseraufnahme aufzunehmen.

Dies kann den Austausch der Schneidmesser ermöglichen bzw. vereinfachen, insbesondere bei Verschleiß und bzw. oder Beschädigung oder um unterschiedliche Schneidmesser alterativ je nach Entgratprozess verwenden zu können.

Die vorliegende Erfindung betrifft auch ein Schneidewerkzeug zur Verwendung bei einer Reifenrohlingentgratvorrichtung wie zuvor beschrieben.

Somit kann ein Schneidwerkzeug zur Verfügung gestellt werden, um eine erfindungsgemäße Reifenrohlingentgratvorrichtung wie zuvor beschrieben zu realisieren.

Die vorliegende Erfindung betrifft ferner einen Adapter zur Verwendung bei einem Schneidewerkzeug wie zuvor beschrieben.

Somit kann ein Adapter zur Verfügung gestellt werden, um ein erfindungsgemäßes Schneidewerkzeug wie zuvor beschrieben zu realisieren.

Mehrere Ausführungsbeispiele und weitere Vorteile der Erfindung werden nachstehend im Zusammenhang mit den folgenden Figuren erläutert. Darin zeigt:
- Fig. 1: eine perspektivische schematische Darstellung einer erfindungsgemäßen Reifenrohlingentgratvorrichtung bzw. dessen erfindungsgemäßen Schneidewerkzeugs gemäß eines ersten Ausführungsbeispiels schräg von der Seite;
- Fig. 2: eine perspektivische schematische Darstellung eines erfindungsgemäßen Adapters dessen erfindungsgemäßen Schneidewerkzeugs der Figur 1 schräg von der Seite;
- Fig. 3: eine eher radiale Ansicht der Figur 1;
- Fig. 4: eine Detailansicht der Figur 1;
- Fig. 5: eine perspektivische schematische Darstellung einer erfindungsgemäßen Reifenrohlingentgratvorrichtung bzw. dessen erfindungsgemäßen Schneidewerkzeugs gemäß eines zweiten Ausführungsbeispiels schräg von oben;
- Fig. 6: eine perspektivische schematische Darstellung eines erfindungsgemäßen Adapters dessen erfindungsgemäßen Schneidewerkzeugs der Figur 5 schräg von der Seite;
- Fig. 7: eine eher radiale Ansicht der Figur 5; und
- Fig. 8: eine Detailansicht der Figur 5.

Die Beschreibung der o.g. Figuren erfolgt in zylindrischen Koordinaten mit einer Längsachse X, einer zur Längsachse X senkrecht ausgerichteten radialen Richtung R sowie einer um die Längsachse X umlaufenden Umfangsrichtung U. Die Längsachse X, die radiale Richtung R und die Umfangsrichtung U können gemeinsam auch als Raumrichtungen X, R, U bzw. als zylindrische Raumrichtungen X, R, U bezeichnet werden.

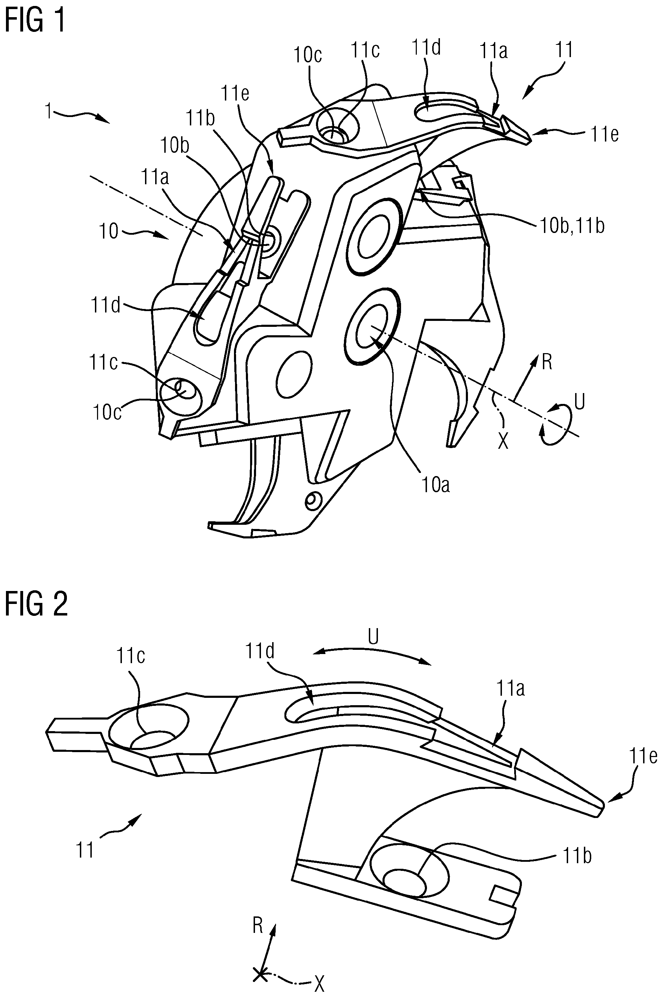

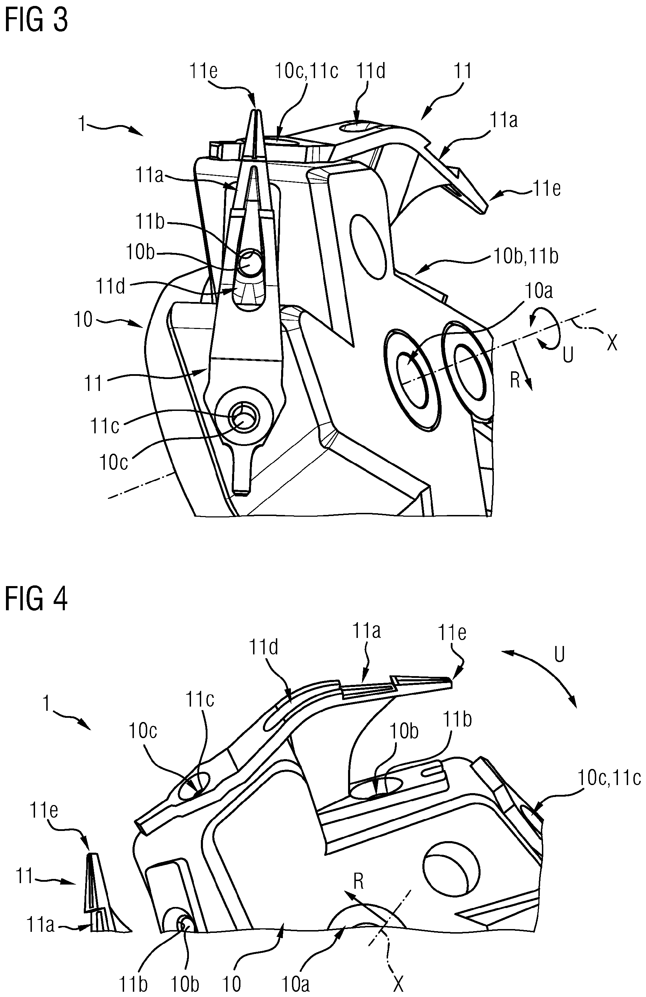

Fig. 1 zeigt eine perspektivische schematische Darstellung einer erfindungsgemäßen Reifenrohlingentgratvorrichtung 1 bzw. dessen erfindungsgemäßen Schneidewerkzeugs 10 gemäß eines ersten Ausführungsbeispiels schräg von der Seite. Fig. 2 zeigt eine perspektivische schematische Darstellung eines erfindungsgemäßen Adapters 11 dessen erfindungsgemäßen Schneidewerkzeugs 10 der Figur 1 schräg von der Seite. Fig. 3 zeigt eine eher radiale Ansicht der Figur 1. Fig. 4 zeigt eine Detailansicht der Figur 1. Die Reifenrohlingentgratvorrichtung 1 bzw. dessen erfindungsgemäßen Schneidewerkzeugs 10 gemäß des ersten Ausführungsbeispiels ist insbesondere zum Entgraten der Wulste von "grünen" Reifenrohlingen geeignet.

Die erfindungsgemäße Reifenrohlingentgratvorrichtung 1 weist das bereits erwähnte Schneidewerkzeug 10 auf, welches ausgebildet ist, rotatorisch um die Längsachse X angetrieben und relativ zu einer zu entgratenden Oberfläche eines Reifenrohlings positioniert zu werden. Das Schneidewerkzeug 10 kann hierzu mittels einer Montageschnittstelle 10a mit einem Antrieb (nicht dargestellt) bzw. mit einem beweglichen Glied der Reifenrohlingentgratvorrichtung 1 feststehend und antriebbar montiert werden. Zwischen dem Schneidewerkzeug 10 bzw. dessen Montageschnittstelle 10a und dem Antrieb bzw. dem beweglichen Glied der Reifenrohlingentgratvorrichtung 1 kann vorzugsweise ein Kraft-/Momentensensor angeordnet sein, um einen automatischen kraftgeregelten Prozess des Entgratens eines Reifenrohlings zu realisieren.

Das Schneidewerkzeug 10 weist in der Umfangsrichtung U um die Längsachse X zueinander versetzt genau vier Adapter 11 auf, welche jeweils ausgebildet sind, ein Schneidmesser in Form einer Schneidplatte (nicht dargestellt) feststehend, aber auswechselbar aufzunehmen. Die Adapter 11 sind dabei jeweils ausgebildet, das Schneidmesser bzw. die Schneidplatte jeweils in einer Schneidmesseraufnahme 11a derart aufzunehmen, so dass das Schneidmesser relativ zu der zu entgratenden Oberfläche des Reifenrohlings positioniert werden kann.

Hierzu weist das Schneidewerkzeug 10 pro Adapter 11 jeweils ein erstes, radial inneres Verbindungselement 10b und sowohl radial zur Längsachse X als auch in der Umfangsrichtung U zur Längsachse X versetzt angeordnet ein zweites, radial äußeres Verbindungselement 10c auf. Korrespondierend hierzu weist der Adapter 11 ein erstes, radial äußeres Verbindungselement 11b und sowohl radial zur Längsachse X als auch in der Umfangsrichtung U zur Längsachse X versetzt angeordnet ein zweites, radial äußeres Verbindungselement 10c auf. Das erste, radial innere Verbindungselement 10b des Schneidwerkzeugs 10 und das erste, radial äußere Verbindungselement 11b des Adapters 11 sowie zweite, radial äußere Verbindungselement 10c des Schneidwerkzeugs 10 und das zweite, radial äußere Verbindungselement 11c des Adapters 11 direkt oder indirekt miteinander feststehend verbunden sind. Dies kann mittels eines speziellen Positionierers mittels einer Schraube oder dergleichen als automatischer Werkzeugwechsel erfolgen.

Dabei ist das erste, radial innere Verbindungselement 10b des Schneidwerkzeugs 10 eine erste, radial innere Gewindebohrung 10b und das erste, radial innere Verbindungselement 11c des Adapters 11 ist eine erste, radial innere Durchgangsöffnung 11c, welche mittels einer Schraube feststehend miteinander verbunden sind. Ebenso ist das zweite, radial äußere Verbindungselement 10c des Schneidwerkzeugs 10 eine zweite, radial äußere Gewindebohrung 10c und das zweite, radial äußere Verbindungselement 11c des Adapters 11 ist eine zweite, radial äußere Durchgangsöffnung 11c, welche mittels einer Schraube feststehend miteinander verbunden sind. Dabei ist der Adapter 11 geschwungen sowie winkelig bzw. rechtwinkelig geformt, vgl. beispielsweise Figur 2.

Jeder Adapter 11 weist dabei eine freistehende Flanke 11e auf, welche sich entlang der Umfangsrichtung U gegenüber dem zweiten, radial äußeren Verbindungselement 11c des Adapters 11 erstreckt. Gleichzeitig ist die freistehende Flanke 11e des Adapters 11 zum ersten, radial inneren Verbindungselement 11c des Adapters 11 radial beabstandet. Ferner ist die Schneidmesseraufnahme 11a des Adapters 11 an dessen freistehender Flanke 11e angeordnet.

Die freistehende Flanke 11e des Adapters 11 weist wenigstens eine Schnittgutöffnung 11d auf, welche ausgebildet und unmittelbar anschließend an die Schneidmesseraufnahme 11a angeordnet ist, um von einem in der Schneidmesseraufnahme 11a aufgenommenem Schneidmesser erzeugtes Schnittgut nach radial innen zur freistehenden Flanke 11e des Adapters 11 abzuführen.

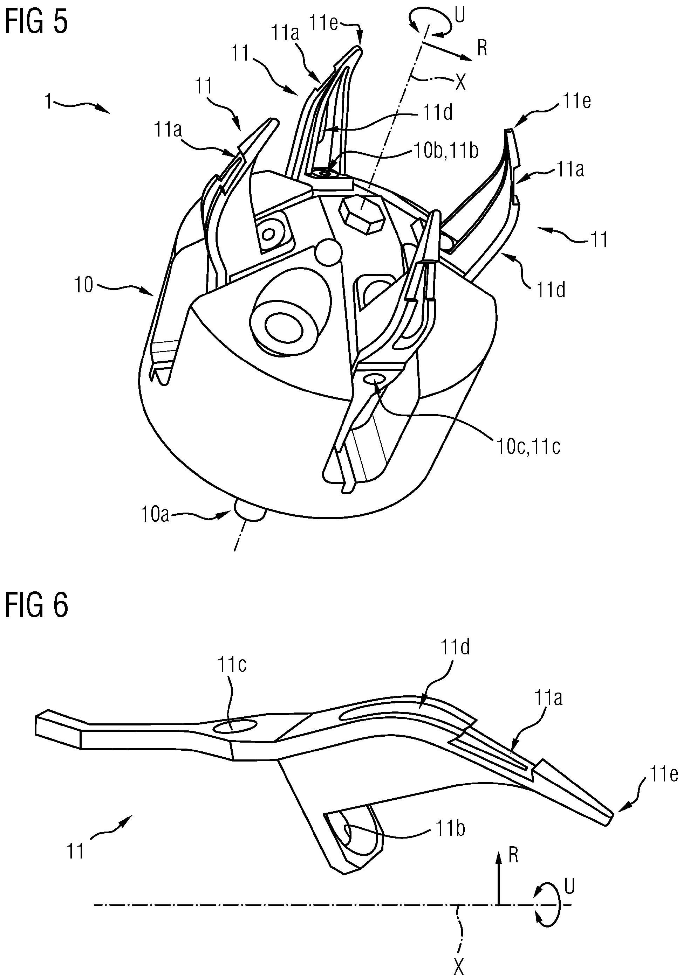

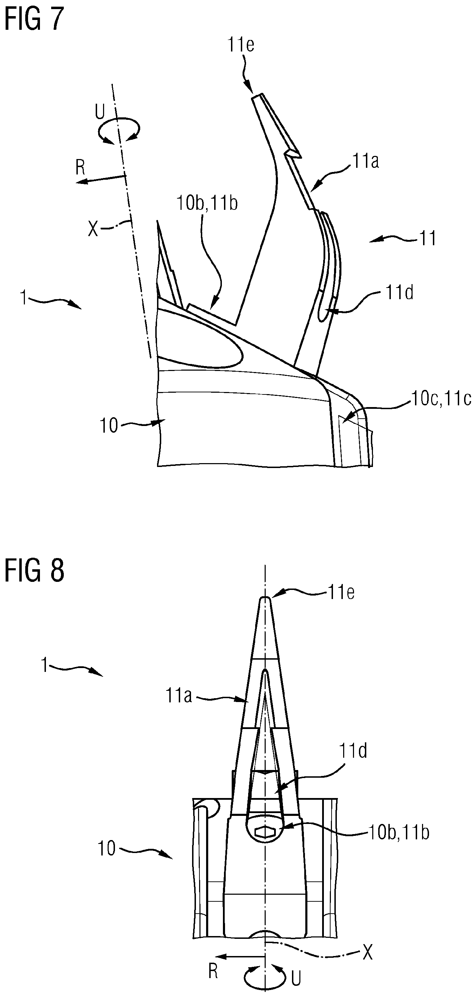

Fig. 5 zeigt eine perspektivische schematische Darstellung einer erfindungsgemäßen Reifenrohlingentgratvorrichtung 1 bzw. dessen erfindungsgemäßen Schneidewerkzeugs 10 gemäß eines zweiten Ausführungsbeispiels schräg von oben. Fig. 6 zeigt eine perspektivische schematische Darstellung eines erfindungsgemäßen Adapters 11 dessen erfindungsgemäßen Schneidewerkzeugs 10 der Figur 5 schräg von der Seite. Fig. 7 zeigt eine eher radiale Ansicht der Figur 5. Fig. 8 zeigt eine Detailansicht der Figur 5. Die Reifenrohlingentgratvorrichtung 1 bzw. dessen erfindungsgemäßen Schneidewerkzeugs 10 gemäß des zweiten Ausführungsbeispiels ist insbesondere zum Entgraten der Schultern von "grünen" Reifenrohlingen geeignet.

In diesem Fall weist das Schneidewerkzeug 10 pro Adapter 11 ein erstes, entlang der Längsachse X ausgerichtetes Verbindungselement 10b und ein sowohl radial zur Längsachse X als auch entlang der Längsachse X versetzt angeordnetes zweites Verbindungselement 10c auf und der Adapter 11 weist ein erstes, entlang der Längsachse X ausgerichtetes Verbindungselement 11b und ein sowohl radial zur Längsachse X als auch entlang der Längsachse X versetzt angeordnetes Verbindungselement 10c auf. Das erste, entlang der Längsachse X ausgerichtete Verbindungselement 10b des Schneidwerkzeugs 10 und das erste, entlang der Längsachse X ausgerichtete Verbindungselement 11b des Adapters 11 sowie das sowohl radial zur Längsachse X als auch entlang der Längsachse X versetzt angeordnete zweite Verbindungselement 10c des Schneidwerkzeugs 10 und das sowohl radial zur Längsachse X als auch entlang der Längsachse X versetzt angeordnete zweite Verbindungselement 11c des Adapters 11 sind direkt oder indirekt miteinander feststehend verbunden.

Dabei ist das erste, entlang der Längsachse X ausgerichtete Verbindungselement 10b des Schneidwerkzeugs 10 eine erste, entlang der Längsachse X ausgerichtete Gewindebohrung 10b und das erste, entlang der Längsachse X ausgerichtete Verbindungselement 11c des Adapters 11 ist eine erste, entlang der Längsachse X ausgerichtete Durchgangsöffnung 11c, welche mittels einer Schraube feststehend miteinander verbunden sind. Das sowohl radial zur Längsachse X als auch entlang der Längsachse X versetzt angeordnete zweite Verbindungselement 10c des Schneidwerkzeugs 10 ist eine sowohl radial zur Längsachse X als auch entlang der Längsachse X versetzt angeordnete zweite Gewindebohrung 10c und das sowohl radial zur Längsachse X als auch entlang der Längsachse X versetzt angeordnete zweite Verbindungselement 11c des Adapters 11 ist eine sowohl radial zur Längsachse X als auch entlang der Längsachse X versetzt angeordnete zweite Durchgangsöffnung 11c, welche mittels einer Schraube feststehend miteinander verbunden sind.

In diesem Fall erstreckt sich die freistehende Flanke 11e des Adapters 11 entlang der Längsachse X gegenüber dem sowohl radial zur Längsachse X als auch entlang der Längsachse X versetzt angeordneten zweiten Verbindungselement 11c des Adapters 11 und die freistehende Flanke 11e des Adapters 11 ist zur Längsachse X radial beabstandet.

### Bezugszeichenliste (Teil der Beschreibung)

- R: radiale Richtung
- U: Umfangsrichtung
- X: Längsachse; vertikale Achse

- 1: Reifenrohlingentgratvorrichtung; Trimmmaschine; Roboter zum Entgraten eines Reifenrohlings
- 10: Schneidewerkzeug
- 10a: Montageschnittstelle
- 10b: erste Verbindungselemente bzw. Gewindebohrungen
- 10c: zweite Verbindungselemente bzw. Gewindebohrungen
- 11: Adapter
- 11a: Schneidmesseraufnahmen
- 11b: erste Verbindungselemente bzw. Durchgangsöffnungen
- 11c: zweite Verbindungselemente bzw. Durchgangsöffnungen
- 11d: Schnittgutöffnungen
- 11e: freistehende Flanken

## Patentansprüche

1. Reifenrohlingentgratvorrichtung (1)
mit einem Schneidewerkzeug (10), welches ausgebildet ist, rotatorisch um die Längsachse (X) angetrieben und relativ zu einer zu entgratenden Oberfläche eines Reifenrohlings positioniert zu werden,
**dadurch gekennzeichnet, dass**
das Schneidewerkzeug (10) wenigstens einen Adapter (11) aufweist, welcher ausgebildet ist, ein Schneidmesser, vorzugsweise eine Schneidplatte, in einer Schneidmesseraufnahme (11a) derart aufzunehmen, so dass das Schneidmesser relativ zu der zu entgratenden Oberfläche des Reifenrohlings positioniert werden kann.

2. Reifenrohlingentgratvorrichtung (1) nach Anspruch 1,
wobei das Schneidewerkzeug (10) mehrere Adapter (11) aufweist, welche jeweils ausgebildet sind, ein Schneidmesser, vorzugsweise eine Schneidplatte, in einer Schneidmesseraufnahme (11a) aufzunehmen.

3. Reifenrohlingentgratvorrichtung (1) nach Anspruch 1 oder 2,
wobei das Schneidewerkzeug (10) in der Umfangsrichtung (U) um die Längsachse (X) zueinander versetzt genau vier Adapter (11) aufweist, welche jeweils ausgebildet sind, ein Schneidmesser, vorzugsweise eine Schneidplatte, in einer Schneidmesseraufnahme (11a) aufzunehmen.

4. Reifenrohlingentgratvorrichtung (1) nach einem der vorangehenden Ansprüche,
wobei das Schneidewerkzeug (10), vorzugsweise pro Adapter (11), ein erstes, radial inneres Verbindungselement (10b) und sowohl radial zur Längsachse (X) als auch in der Umfangsrichtung (U) zur Längsachse (X) versetzt angeordnetes zweites, radial äußeres Verbindungselement (10c) aufweist und
wobei der Adapter (11) ein erstes, radial äußeres Verbindungselement (11b) und sowohl radial zur Längsachse (X) als auch in der Umfangsrichtung (U) zur Längsachse (X) versetzt angeordnetes zweites, radial äußeres Verbindungselement (10c) aufweist,
wobei das erste, radial innere Verbindungselement (10b) des Schneidwerkzeugs (10) und das erste, radial äußere Verbindungselement (11b) des Adapters (11) sowie zweite, radial äußere Verbindungselement (10c) des Schneidwerkzeugs (10) und das zweite, radial äußere Verbindungselement (11c) des Adapters (11) direkt oder indirekt miteinander feststehend verbunden sind.

5. Reifenrohlingentgratvorrichtung (1) nach Anspruch 4,
wobei das erste, radial innere Verbindungselement (10b) des Schneidwerkzeugs (10) eine erste, radial innere Gewindebohrung (10b) und das erste, radial innere Verbindungselement (11c) des Adapters (11) eine erste, radial innere Durchgangsöffnung (11c) ist, welche mittels einer Schraube feststehend miteinander verbunden sind, und/oder wobei das zweite, radial äußere Verbindungselement (10c) des Schneidwerkzeugs (10) eine zweite, radial äußere Gewindebohrung (10c) und das zweite, radial äußere Verbindungselement (11c) des Adapters (11) eine zweite, radial äußere Durchgangsöffnung (11c) ist, welche mittels einer Schraube feststehend miteinander verbunden sind.

6. Reifenrohlingentgratvorrichtung (1) nach einem der Ansprüche 1 bis 3, wobei das Schneidewerkzeug (10), vorzugsweise pro Adapter (11), ein erstes, entlang der Längsachse (X) ausgerichtetes Verbindungselement (10b) und ein sowohl radial zur Längsachse (X) als auch entlang der Längsachse (X) versetzt angeordnetes zweites Verbindungselement (10c) aufweist und
wobei der Adapter (11) ein erstes, entlang der Längsachse (X) ausgerichtetes Verbindungselement (11b) und ein sowohl radial zur Längsachse (X) als auch entlang der Längsachse (X) versetzt angeordnetes Verbindungselement (10c) aufweist,
wobei das erste, entlang der Längsachse (X) ausgerichtete Verbindungselement (10b) des Schneidwerkzeugs (10) und das erste, entlang der Längsachse (X) ausgerichtete Verbindungselement (11b) des Adapters (11) sowie das sowohl radial zur Längsachse (X) als auch entlang der Längsachse (X) versetzt angeordnete zweite Verbindungselement (10c) des Schneidwerkzeugs (10) und das sowohl radial zur Längsachse (X) als auch entlang der Längsachse (X) versetzt angeordnete zweite Verbindungselement (11c) des Adapters (11) direkt oder indirekt miteinander feststehend verbunden sind.

7. Reifenrohlingentgratvorrichtung (1) nach Anspruch 4,
wobei das erste, entlang der Längsachse (X) ausgerichtete Verbindungselement (10b) des Schneidwerkzeugs (10) eine erste, entlang der Längsachse (X) ausgerichtete Gewindebohrung (10b) und das erste, entlang der Längsachse (X) ausgerichtete Verbindungselement (11c) des Adapters (11) eine erste, entlang der Längsachse (X) ausgerichtete Durchgangsöffnung (11c) ist, welche mittels einer Schraube feststehend miteinander verbunden sind, und/oder
wobei das sowohl radial zur Längsachse (X) als auch entlang der Längsachse (X) versetzt angeordnete zweite Verbindungselement (10c) des Schneidwerkzeugs (10) eine sowohl radial zur Längsachse (X) als auch entlang der Längsachse (X) versetzt angeordnete zweite Gewindebohrung (10c) und das sowohl radial zur Längsachse (X) als auch entlang der Längsachse (X) versetzt angeordnete zweite Verbindungselement (11c) des Adapters (11) eine sowohl radial zur Längsachse (X) als auch entlang der Längsachse (X) versetzt angeordnete zweite Durchgangsöffnung (11c) ist, welche mittels einer Schraube feststehend miteinander verbunden sind.

8. Reifenrohlingentgratvorrichtung (1) nach einem der Ansprüche 4 bis 7, wobei der Adapter (11) geschwungen und/oder winkelig, vorzugsweise rechtwinkelig, geformt ist.

9. Reifenrohlingentgratvorrichtung (1) nach einem der Ansprüche 4 oder 5 und nach Anspruch 8,
wobei sich eine freistehende Flanke (11e) des Adapters (11) entlang der Umfangsrichtung (U) gegenüber dem zweiten, radial äußeren Verbindungselement (11c) des Adapters (11) erstreckt und
wobei die freistehende Flanke (11e) des Adapters (11) zum ersten, radial inneren Verbindungselement (11c) des Adapters (11) radial beabstandet ist.

10. Reifenrohlingentgratvorrichtung (1) nach einem der Ansprüche 6 oder 7 und nach Anspruch 8,
wobei sich eine freistehende Flanke (11e) des Adapters (11) entlang der Längsachse (X) gegenüber dem sowohl radial zur Längsachse (X) als auch entlang der Längsachse (X) versetzt angeordneten zweiten Verbindungselement (11c) des Adapters (11) erstreckt und
wobei die freistehende Flanke (11e) des Adapters (11) zur Längsachse (X) radial beabstandet ist.

11. Reifenrohlingentgratvorrichtung (1) nach Anspruch 9 oder 10,
wobei die Schneidmesseraufnahme (11a) des Adapters (11) an dessen freistehender Flanke (11e) angeordnet ist.

12. Reifenrohlingentgratvorrichtung (1) nach Anspruch 11,
wobei die freistehende Flanke (11e) des Adapters (11) wenigstens eine Schnittgutöffnung (11d) aufweist, welche ausgebildet und relativ zur Schneidmesseraufnahme (11a), vorzugsweise unmittelbar anschließend an die Schneidmesseraufnahme (11a), angeordnet ist, um von einem in der Schneidmesseraufnahme (11a) aufgenommenem Schneidmesser erzeugtes Schnittgut nach radial innen zur freistehenden Flanke (11e) des Adapters (11) abzuführen.

13. Reifenrohlingentgratvorrichtung (1) nach einem der vorangehenden Ansprüche,
wobei der Adapter (11) ausgebildet ist, das Schneidmesser, vorzugsweise die Schneidplatte, auswechselbar in der Schneidmesseraufnahme (11a) aufzunehmen.

14. Schneidewerkzeug (10) zur Verwendung bei einer Reifenrohlingentgratvorrichtung (1) gemäß einem der vorangehenden Ansprüche.

15. Adapter (11) zur Verwendung bei einem Schneidewerkzeug (10) nach Anspruch 14.
